# EUROPEAN PATENT APPLICATION

(11) **EP 4 644 347 A1**
(43) Date of publication of application: **05.11.2025**
(21) Application number: 23912184.1
(22) Date of filing: 26.12.2023
(51) Int. Cl.: C03C 27/12, B32B 17/10, B60J 1/00

(54) **LAMINATED GLASS AND LAMINATED GLASS COMPOSITE INTERLAYER FILM**

(30) Priority: 28.12.2022 JP 2022212605
(71) Applicant: Sekisui Chemical Co., Ltd., Osaka-shi, Osaka 530-8565 (JP)
(72) Inventor: IZU, Yasuyuki, Mishima-gun, Osaka 618-0021 (JP); TOMURA, Kazuhiro, 6045JB Roermond (NL); NAKAJIMA, Daisuke, 6041LE Roermond (NL); YANAI, Masashi, 6041LE Roermond (NL)
(74) Representative: Ter Meer Steinmeister & Partner
(86) International application number: PCT/JP2023/046771
(87) International publication number: WO 2024/143406

(57) **Abstract**

A laminated glass (1A) of the present invention includes: a pair of laminated glass members (61); an interlayer film for laminated glass (50) disposed between the pair of laminated glass members (61); a sheet-shaped functional element (10); a power receiving portion (20) that receives power by wireless power supply; a driving portion (30) that drives the sheet-shaped functional element by the power received by the power receiving portion (20); and a control portion (40) that receives a signal transmitted by a wireless apparatus and controls the driving portion (30) based on the received signal. The sheet-shaped functional element (10), the power receiving portion (20), the driving portion (30), and the control portion (40) are provided in the interlayer film for laminated glass (50). According to the present invention, it is possible to provide an easily attachable and durable laminated glass and a composite interlayer film for laminated glass used therefor.

## Description

### Technical Field

The present invention relates to a laminated glass including a sheet-shaped functional element and a composite interlayer film for laminated glass.

### Background Art

There is known a vehicle laminated glass (e.g., PTL 1) in which a light control film is sealed inside the laminated glass and the transmittance can be switched depending on the application of a voltage. When such a laminated glass is used for a vehicle window, for example, making the vehicle window transparent gives passengers a sense of openness, while making it opaque ensures the privacy of passengers and blocks out the sunlight.

### Citation List

### Patent Literature

PTL 1: JP 2009-36967 A

### Summary of Invention

### Technical Problem

To bring out the light control function of the light control film inside the laminated glass, it is necessary to supply power to the light control film and transmit a signal to a control circuit to control the light control film. Conventionally, by connecting the light control film and a vehicle main body by a cable, power has been supplied to the light control film and a signal has been transmitted to the control circuit for controlling the light control film.

However, when attaching the laminated glass, the cable needs to be connected to the laminated glass, which is inefficient. Additionally, in a case where the laminated glass is used as a movable window such as a side glass and a roof glass, there is a problem that the cable deteriorates over time due to repeated opening and closing of the window.

Therefore, the present invention has been made in view of the above problems, and also aims to provide an easily attachable and durable laminated glass and a composite interlayer film for laminated glass used therefor.

### Solution to Problem

As a result of careful consideration, the present inventors found that the above problems can be solved by using wireless power supply and wireless apparatus, and have completed the following invention.
[1] A laminated glass including:
   a pair of laminated glass members;
   an interlayer film for laminated glass disposed between the pair of laminated glass members;
   a sheet-shaped functional element;
   a power receiving portion that receives power by wireless power supply;
   a driving portion that drives the sheet-shaped functional element by the power received by the power receiving portion; and
   a control portion that receives a signal transmitted by a wireless apparatus and controls the driving portion based on the received signal, in which
   the sheet-shaped functional element, the power receiving portion, the driving portion, and the control portion are provided in the interlayer film for laminated glass.
[2] The laminated glass according to [1], in which the sheet-shaped functional element is at least one type of element selected from the group consisting of a light control element, a display element, a heater element, and a touch panel.
[3] The laminated glass according to [1] or [2], in which at least one type of configuration selected from the group consisting of the sheet-shaped functional element, the power receiving portion, the driving portion, and the control portion is embedded in the interlayer film for laminated glass.
[4] A composite interlayer film for laminated glass including:
   a sheet-shaped functional element;
   a power receiving portion that receives power by wireless power supply;
   a driving portion that drives the sheet-shaped functional element by the power received by the power receiving portion;
   a control portion that receives a signal transmitted by a wireless apparatus and controls the driving portion based on the received signal; and
   an interlayer film for laminated glass, in which
   the power receiving portion, the driving portion, and the control portion are provided in the interlayer film for laminated glass.

### Advantageous Effects of Invention

According to the present invention, it is possible to provide an easily attachable and durable laminated glass and a composite interlayer film for laminated glass used therefor.

### Brief Description of Drawings

[Fig. 1] Fig. 1 is a cross-sectional view of a laminated glass of a first embodiment of the present invention.
[Fig. 2] Fig. 2 is a diagram for describing a manufacturing method of the laminated glass of the first embodiment of the present invention.
[Fig. 3] Fig. 3 is a block diagram of the laminated glass of the first embodiment of the present invention.
[Fig. 4] Fig. 4 is a diagram for describing a side glass using the laminated glass of the first embodiment of the present invention.
[Fig. 5] Fig. 5 is a cross-sectional view of a side door using the laminated glass of the first embodiment of the present invention.
[Fig. 6] Fig. 6 is a cross-sectional view of a laminated glass of a second embodiment of the present invention.
[Fig. 7] Fig. 7 is an exploded view of the laminated glass of the second embodiment of the present invention.
[Fig. 8] Fig. 8 is a diagram for describing a laminated glass (roof glass) of a third embodiment of the present invention.
[Fig. 9] Fig. 9 is a diagram for describing a laminated glass (roof glass) of a fourth embodiment of the present invention.

### Description of Embodiments

### [First embodiment]

Hereinafter, a laminated glass according to a first embodiment of the present invention will be described with reference to the drawings.

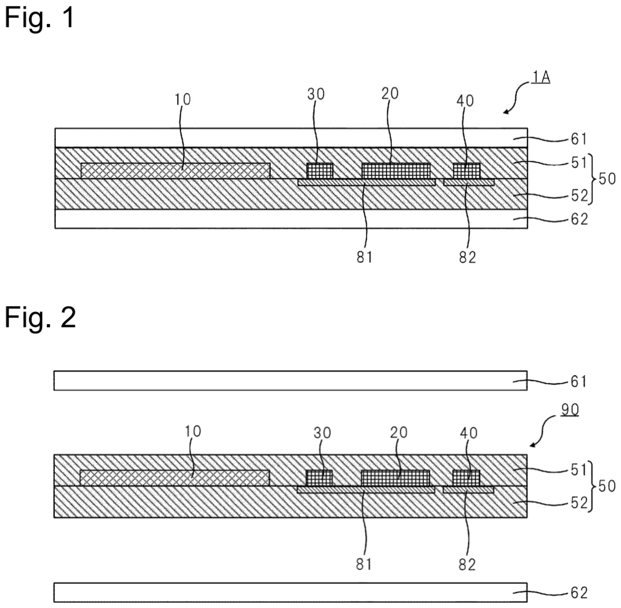

Fig. 1 is a cross-sectional view of a laminated glass according to the first embodiment of the present invention. As illustrated in Fig. 1, a laminated glass 1A of the first embodiment of the present invention includes a pair of laminated glass members 61 and 62, an interlayer film for laminated glass 50 disposed between the pair of laminated glass members 61 and 62, a sheet-shaped functional element 10, a power receiving portion 20, a driving portion 30, and a control portion 40. The power receiving portion 20 receives power by wireless power supply. The driving portion 30 drives the sheet-shaped functional element 10 by the power received by the power receiving portion 20. The control portion 40 receives a signal transmitted by a wireless apparatus and controls the driving portion 30 based on the received signal. Then, the sheet-shaped functional element 10, the power receiving portion 20, the driving portion 30, and the control portion 40 are provided in the interlayer film for laminated glass 50. As a result, since power for driving the sheet-shaped functional element 10 of the laminated glass 1A and signals for controlling the sheet-shaped functional element 10 do not need to be transmitted via a cable, attachment of the laminated glass 1A is made easy, and durability of the laminated glass 1A is enhanced even more.

### (Sheet-shaped functional element)

Although not particularly limited, examples of the sheet-shaped functional element 10 provided in the laminated glass 1A of the first embodiment of the present invention include a light control element, a display element, a heater element, and a touch panel. Note that while a relatively large power needs to be supplied to the light control element, the display element, and the heater element, in the laminated glass 1A of the first embodiment of the present invention, a large power can be supplied to these elements by wireless power supply without connecting a cable.

### <Light control element>

Specifically, the light control element is preferably a light control film including two resin films and a light control layer disposed between the two resin films. Accordingly, the bonding surface of the light control film is made of a resin material, which can increase the bonding strength. Although not particularly limited, examples of the resin film used for the light control element include polyester resin films such as PET film and PEN film, (meth) acrylic resin film, TAC film, PES resin film, and polyimide resin film. Among these, polyester resin film is preferable from the perspective of handling, for example, and PET film is even more preferable. In addition, each of the two resin films has a conductive layer that forms an electrode on a surface facing the light control layer.

The light control layer changes the visible light transmittance by switching the application and non-application of a voltage between the conductive layers of the two resin films. The light control layer is formed of a liquid crystal layer such as a polymer-dispersed liquid crystal (PDLC), and the light control film may be a PDLC film. Moreover, the light control film may also be suspended particle device (SPD) film, electrochromic film, or an electrophoresis film device. Accordingly, the light control layer may be an SPD layer containing a resin matrix and a light-adjusting suspension dispersed in the resin matrix, or it may be an electrochromic material layer. Moreover, the light control layer may also be an electrophoresis layer that includes electrophoresis particles and a dispersant that disperses the electrophoresis particles.

### <Display element>

Examples of a display element include those mounted on a resin film. The display element may be provided between a pair of resin films. Note that as for the resin film used for the display element, the resin film listed in the light control film section can be used as appropriate.

Examples of the display element include an organic EL element, an LED display, and a segment display, but among these, an organic EL element is preferable.

### <Heater element>

The heater element is a transparent conductive film, such as a ZnO-based transparent conductive film, an In₂O₃-ZnO-based transparent conductive film, a Ga-doped ZnO (GZO) film, an indium tin oxide (ITO) film, a p-type oxide transparent conductive film, or an In₄Sn₃O₁₂ transparent conductive film, which is deposited on glass. By supplying power to the transparent conductive film, the transparent conductive film generates heat, and this causes the heater element to generate heat.

### <Touch panel>

Examples of the touch panel include resistive, capacitive, optical, surface acoustic wave (SAW), and electromagnetic induction types. Among these, SAW-type and optical-type touch panels are preferable from the perspective of durability.

As the sheet-shaped functional element 10, among the above, the light control element, the display element, and the heater element are preferably used, and the light control element is more preferably used.

Moreover, although not illustrated, two or more sheet-shaped functional elements 10 may be provided. For example, one of the light control element, the display element, and the heater element and a touch panel for operating one of these may be used.

The touch panel may be arranged in line with the light control element, the display element, or the heater element in the plane direction, or may be provided on top of the light control element, the display element, or the heater element. In the case where the touch panel and one of the light control element, the display element, and the heater element is provided, a control signal may be transmitted to the control portion 40 based on an input on the touch panel, and one of the light control element, the display element, and the heater element is preferably controlled by the control signal.

While the touch panel and the control portion 40 may be connected by wiring, they do not need to be connected by wiring, and the control signal may be transmitted to the control portion 40 by the sheet-shaped functional element (touch panel) as light such as visible light and infrared rays.

### (Power receiving portion)

The power receiving portion 20 receives power by wireless power supply. Examples of the wireless power supply include electromagnetic induction, magnetic resonance, electric field coupling, and radio wave reception. For example, in the magnetic resonance method, the 50/60 Hz commercial frequency is converted to a high frequency using an inverter, a magnetic field is generated using a power transmission coil, and power is extracted using a power receiving coil. Therefore, if the wireless power supply is of the magnetic resonance method, the power receiving portion 20 includes a power receiving coil.

### (Driving portion)

The driving portion 30 drives the sheet-shaped functional element 10 by power received by the power receiving portion 20. Note that while Figs. 1 to 4 illustrate an example in which the driving portion 30 is a member separate from the sheet-shaped functional element 10 and the control portion 40, the driving portion 30 may be integrated with sheet-shaped functional element 10, or may be integrated with the control portion 40.

### (Control portion)

The control portion 40 receives a signal transmitted by a wireless apparatus, and controls the driving portion based on the received signal. The control portion 40 includes a microcontroller unit (MCU), for example. The MCU includes, for example, a central processing unit (CPU), a memory, a timer, an interface, and the like.

### <Wireless apparatus>

The wireless apparatus of the signal received by the control portion is not particularly limited. For examples types of the wireless apparatus of the signal received by the control portion include, ultra wide band (UWB), wireless LAN, ultrasonic waves, millimeter waves, Bluetooth Low Energy (BLE), infrared light communication, and visible light communication. Among these wireless apparatus, BLE is preferable. The control portion 40 preferably includes an antenna for receiving signals.

The control portion 40 may transmit a signal for controlling the driving portion 30 to the driving portion 30 via wiring (not illustrated). Additionally, the control portion 40 may transmit the above signal to the driving portion 30 via light such as visible light and infrared rays.

### (Laminated glassInterlayer film for laminated glass)

As illustrated in Fig. 1, the laminated glass 1A of the first embodiment of the present invention includes the interlayer film for laminated glass 50. As illustrated in Fig. 1, the interlayer film for laminated glass 50 is preferably formed of a plurality of resin layers (51 and 52 in present embodiment). This makes it easier to incorporate the sheet-shaped functional element 10, the power receiving portion 20, the driving portion 30, and the control portion 40 into the laminated glass 1A.

Then, as illustrated in Fig. 1, for example, the sheet-shaped functional element 10, the power receiving portion 20, the driving portion 30, and the control portion 40 are preferably disposed between the resin layer 51 and the resin layer 52 forming the interlayer film for laminated glass 50. Then, as illustrated in Fig. 1, the sheet-shaped functional element 10, the power receiving portion 20, the driving portion 30, and the control portion 40 are preferably disposed so as to be embedded in the interlayer film for laminated glass. Note that the sheet-shaped functional element 10, the power receiving portion 20, the driving portion 30, and the control portion 40 provided integrally in the interlayer film for laminated glass as illustrated in Fig. 1 is referred to as a composite interlayer film for laminated glass (see reference numeral 90 in Fig. 2). Additionally, the term composite interlayer film for laminated glass may be abbreviated to composite interlayer film.

With the above configuration, members such as the sheet-shaped functional element 10 can be even more easily incorporated into the laminated glass. Moreover, this makes it easier to prevent generation of air bubbles around the sheet-shaped functional element 10, the power receiving portion 20, the driving portion 30, and the control portion 40 when manufacturing the laminated glass 1A.

### <Resin layer>

Thermoplastic resin is preferably used as the resin used for the resin layers 51 and 52. The thermoplastic resin used for the resin layers 51 and 52 is not particularly limited. Examples of the thermoplastic resin used for the resin layers 51 and 52 include polyvinyl acetal resin, ethylene-vinyl acetate copolymer resin, ionomer resin, polyurethane resin, thermoplastic elastomer, acrylic resin, acrylic-vinyl acetate copolymer resin, polyvinyl alcohol resin, polyolefin resin, polyvinyl acetate resin, and polystyrene resin. Use of the above resin makes it easier to ensure adhesion with the laminated glass members 61 and 62. One type of the thermoplastic resin may be used alone or two or more types of thermoplastic resin may be used together. Moreover, among these, polyvinyl acetal resin is particularly suitable because it exhibits excellent adhesion to the laminated glass members 61 and 62 when plasticizers are added to the resin layers 51 and 52.

In the case where the resin layers 51 and 52 contain thermoplastic resin, a plasticizer may be further added to the resin layers 51 and 52. By adding the plasticizer to the resin layers 51 and 52, the resin layers 51 and 52 become more flexible. Furthermore, in the case of the laminated glass members 61 and 62, particularly in a case where the laminated glass members 61 and 62 are inorganic glass, adhesion with the laminated glass members 61 and 62 can be enhanced. Adding the plasticizer to the resin layers 51 and 52 is particularly effective when polyvinyl acetal resin is used as the thermoplastic resin.

Examples of the plasticizer include organic ester plasticizers such as monobasic organic acid esters and polybasic organic acid esters, as well as phosphate plasticizers such as organic phosphate plasticizers and organic phosphite plasticizers. Among these, organic ester plasticizers are preferable, and triethylene glycol di-2-ethylhexanoate (3GO) is particularly suitable.

The plasticizer content in the resin layers 51 and 52 is not particularly limited, but is, for example, 20 to 100 parts by mass, preferably 30 to 70 parts by mass, for 100 parts by mass of thermoplastic resin. Furthermore, in a case where the resin layers 51 and 52 contain thermoplastic resin, the thermoplastic resin or the thermoplastic resin and plasticizer is the main ingredient and the total amount of thermoplastic resin and plasticizer is usually 70% or more by mass, preferably 80% or more by mass, and even more preferably 90% or more by mass, based on the total amount of the resin layer.

The thickness of each of the resin layers 51 and 52 is not particularly limited, but is, for example, 0.1 mm to 2 mm, preferably 0.2 mm to 2 mm, and more preferably 0.3 mm to 1 mm.

Note that while the configuration of Fig. 1 illustrates a case where two layers of the resin layers 51 and 52 are provided, three or more resin layers may be provided. In the case where the interlayer film for laminated glass is formed of three or more resin layers, the sheet-shaped functional element may be disposed between one resin layer and two or more laminated resin layers, or between two or more laminated resin layers and two or more laminated resin layers. Additionally, of the plurality of resin layers forming the interlayer film for laminated glass, the resin layers (resin layers 51 and 52 in Fig. 1) disposed on the outermost surface are preferably bonded to the laminated glass members 61 and 62, respectively.

### (Laminated glass member)

Both inorganic glass and organic glass can be used as the laminated glass members 61 and 62. While not particularly limited, examples of the inorganic glass include clear glass, float glass plate, polished glass plate, patterned glass plate, wired glass plate, lined glass plate, and green glass. Meanwhile, those generally referred to as resin glass are used as the organic glass, and, although not particularly limited, examples thereof include transparent organic glasses made from polycarbonate, acrylic resin, acrylic copolymer resin, polyester, and the like.

The laminated glass members 61 and 62 may be made of the same type of material or may be made of different materials, and one may be inorganic glass while the other may be organic glass, for example. Note, however, that in a case where a plurality of the laminated glass members 61 and 62 are provided, it is preferable that all of the plurality of laminated glass members are inorganic glass or all of the plurality of laminated glass members are organic glass.

While the thickness of the laminated glass members 61 and 62 is not particularly limited, it is about 0.1 mm to 15 mm, and preferably 0.5 mm to 5 mm, for example. The thickness of the laminated glass members 61 and 62 may be the same or may be different.

### (Flexible substrate)

As illustrated in Fig. 1, the power receiving portion 20, the driving portion 30, and the control portion 40 may be mounted on flexible substrates 81 and 82. By mounting the power receiving portion 20, the driving portion 30, and the control portion 40 on the flexible substrates 81 and 82, flexibility of the interlayer film for laminated glass 50 is more easily ensured. Hence, it becomes even more easier to apply the laminated glass 1A of the first embodiment of the present invention to a movable glass such as the side glass and roof glass of a vehicle. While the present embodiment illustrates a mode in which the power receiving portion 20 and the driving portion 30 are mounted on the flexible substrate 81 and the control portion 40 is mounted on another flexible substrate 82, the arrangement is not limited to this. For example, the power receiving portion 20, the driving portion 30, and the control portion 40 may be mounted on one flexible substrate, or each of the power receiving portion 20, the driving portion 30, and the control portion 40 may be mounted on a separate flexible substrate.

For the flexible substrates 81 and 82, it is preferable to use resin films such as polyimide film, polyester film, and polycarbonate film, but it is also possible to use materials other than resin films.

### (Manufacturing method of laminated glass)

The laminated glass of the present invention is preferably manufactured by first manufacturing the composite interlayer film, and then adhering two sheets of laminated glass together via the composite interlayer film. Hereinafter, first, a method of manufacturing the composite interlayer film will be described.

The composite interlayer film is obtained by laminating a plurality of resin layers to form an interlayer film, and then integrating the laminate obtained by disposing the sheet-shaped functional element, the power receiving portion, the driving portion, and the control portion between the resin layers. As a result, the sheet-shaped functional element, the power receiving portion, the driving portion, and the control portion can be embedded in the interlayer film formed of the plurality of resin layers.

The laminate is preferably integrated by thermocompression bonding. By integrating the laminate by thermocompression bonding, it becomes possible to appropriately embed the sheet-shaped functional element, the power receiving portion, the driving portion, and the control portion with the interlayer film. Here, the heating temperature for thermocompression bonding is, for example, 30°C or more and 130°C or less, and preferably 40°C or more and 100°C or less. In addition, the pressure (gauge pressure) for thermocompression bonding is, for example, 0.01 MPa or more and 17 MPa or less, and preferably 1 MPa or more and 8 MPa or less. It is also possible to use negative pressure for bonding, such as, a gauge pressure of around -780 mbar.

By thermocompression bonding at the above temperatures and pressures, it is possible to embed the sheet-shaped functional element, the power receiving portion, the driving portion, and the control portion in the interlayer film without leaving any air in the surrounding areas of the sheet-shaped functional element, power receiving portion, driving portion, and control portion, or in the edges of the interlayer film. Moreover, it is possible to make the thickness of the obtained composite interlayer film uniform. Note that thermocompression bonding is preferably performed using press forming, roll forming, vacuum laminators and the like.

Note that when performing thermocompression bonding, a release sheet may be disposed on one or both sides of the above laminate to prevent the interlayer film from sticking to the forming machine (e.g. press plate).

Although the method of manufacturing the laminated glass using the composite interlayer film is not particularly limited, a general method of manufacturing a laminated glass may be adopted. For example, as illustrated in Fig. 2, a composite interlayer film 90 is preferably disposed between a pair of laminated glass members 61 and 62 to be thermocompression bonded and integrated by pressurizing and heating them in an autoclave or similar device. The heating temperature during thermocompression bonding is, for example, 60°C or more and 180°C or less, and preferably 80°C or more and 160°C or less. Additionally, the pressure (gauge pressure) during thermocompression bonding is, for example, 1 MPa or more and 18 MPa or less, and preferably 3 MPa or more and 15 MPa or less.

Note, however, that the method of manufacturing the laminated glass is not limited to the above method, and bonding of the laminated glass members and resin layer can be combined with integration of the composite interlayer film. Specifically, for the plurality of resin layers that are laminated together to form an interlayer film, a laminate may be obtained by disposing the sheet-shaped functional element, the power receiving portion, the driving portion, and the control portion between resin layers, and the laminate may be placed between two laminated glass members before they are integrated, and the components may be thermocompression bonded and integrated altogether.

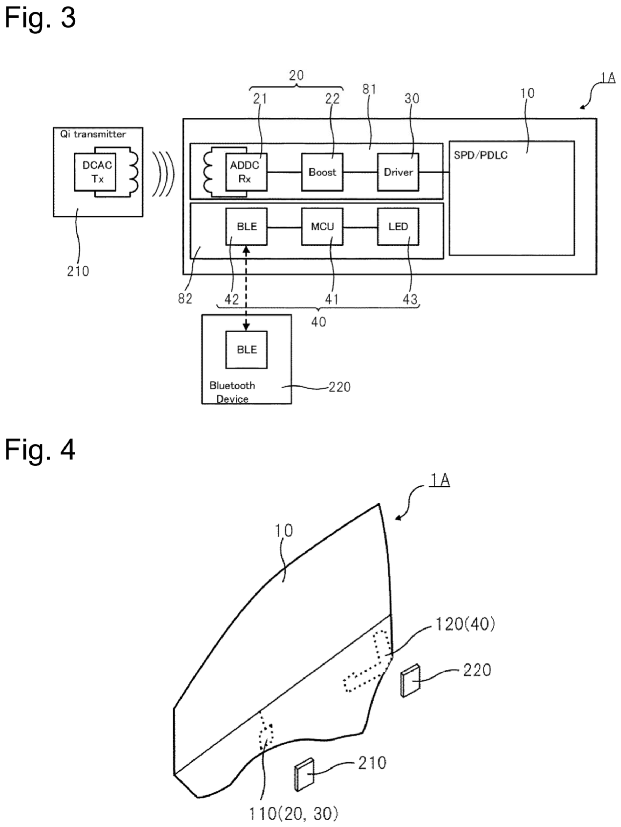

Fig. 3 illustrates an example of a block diagram of the laminated glass 1A of the first embodiment of the present invention. In this block diagram, the laminated glass 1A includes the power receiving portion 20, the driving portion 30, the control portion 40, and the sheet-shaped functional element 10. Additionally, the power receiving portion 20 includes a power receiving device 21 and a boost converter 22. Furthermore, the control portion 40 includes a control device 41, a reception device 42, and an LED light-emitting device 43. The power receiving device 21 extracts power from the magnetic field generated by a power transmission coil of an external wireless power supply device 210, and converts the extracted power from alternating current to direct current. The boost converter 22 converts the input voltage to a higher output voltage and supplies the converted power to the driving portion 30. The driving portion 30 drives the sheet-shaped functional element 10 using power whose voltage has been converted by the boost converter 22. The reception device 42 receives a wireless signal from an external wireless communication device 220 and transmits the received signal to the control device 41. The control device 41 transmits a signal for controlling the driving portion 30 to the LED light-emitting device 43 based on the received signal. The LED light-emitting device 43 generates an infrared light signal based on the signal from the control device 41 and irradiates the driving portion 30. The driving portion 30 controls driving of the sheet-shaped functional element 10 based on the light signal from the LED light-emitting device 43.

### (Example of use)

In a case where the sheet-shaped functional element is a light control element, the laminated glass 1A of the first embodiment of the present invention can be used for a side glass of a side door, for example.

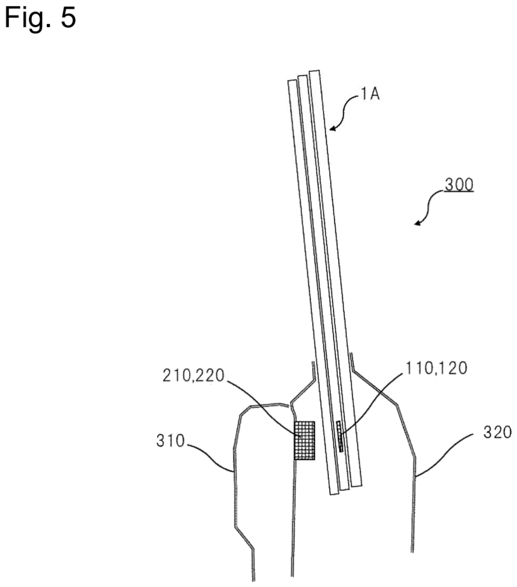

Fig. 4 is a diagram illustrating a side glass 1A of a vehicle using the laminated glass 1A of the first embodiment of the present invention. Fig. 5 is a cross-sectional view of a side door 300 in which the side glass 1A is provided. The side glass 1A is provided in the side door 300 in an openable and closable manner. The laminated glass 1A used as the side glass 1A includes a light control element 10, a unit 110 in which the power receiving portion 20 and the driving portion 30 are integrated, and a unit 120 including the control portion 40.

The Unit 110 is a unit that has been created by mounting members that form the power receiving portion 20 and the driving portion 30 on a flexible substrate, as described above. The same applies to the unit 120.

Additionally, as illustrated in Fig. 5, the wireless power supply device 210 and the wireless communication device 220 are provided in a vehicle main body (frame 310 of side door 300) as illustrated in Fig. 5. More specifically, the wireless power supply device 210 and the wireless communication device 220 are preferably provided inside the side door 300 to which the laminated glass 1A (side glass) is attached, and is preferably disposed in an inner part of the frame 310 of the side door 300, for example.

Moreover, the wireless power supply device 210 and the wireless communication device 220 are preferably disposed in positions inside the side door 300 such that they face the units 110 and 120, respectively, when the side glass is in a closed state. Note that the state where the side glass 1A is closed is a state where the upper end of the side glass 1A extends to the top and there is no gap between the upper end of the side glass 1A and the vehicle main body.

The power receiving portion 20 of unit 110 extracts power from the magnetic field generated by the power transmission coil of the wireless power supply device 210 provided in the vehicle main body, converts the extracted power from alternating current to direct current, and supplies the converted current to the driving portion 30 of the unit 110. The control portion 40 receives a wireless signal from the wireless communication device 220 provided in the vehicle main body, and controls the driving portion 30 of the unit 110 based on the received signal. Note that the control portion 40 may irradiate the unit 110 with infrared light, and a signal to control the driving portion 30 of the unit 110 may be transmitted from the control portion 40 to the driving portion 30 via the infrared light. Additionally, since the unit 110 and the control portion 40 are hidden in the frames 310 and 320 of the side door 300, they cannot be seen from outside. Moreover, since power is not supplied to the unit 110 via a cable, use of the laminated glass 1A of the first embodiment of the present invention for the side glass of the vehicle does not cause the cable supplying power to the unit to deteriorate over the course of repeated opening and closing of the side glass.

### [Second embodiment]

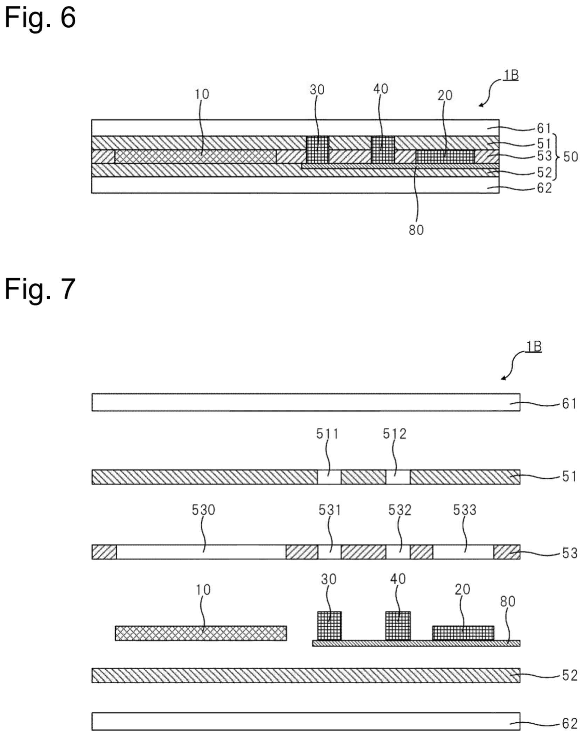

Next, a laminated glass 1B of a second embodiment of the present invention will be described with reference to Figs. 6 and 7. Note that Fig. 7 is an exploded view of the laminated glass 1B of the second embodiment illustrated in Fig. 6. In addition, in the laminated glass 1B of the second embodiment of the present invention, descriptions of parts similar to those of the laminated glass 1A of the first embodiment of the present invention are omitted, and parts different from the laminated glass 1A of the first embodiment of the present invention will mainly be described.

An interlayer film for laminated glass 50 in the laminated glass 1B of the second embodiment includes a resin layer 53 in addition to resin layers 51 and 52. In the resin layer 53, holes 530 to 533 corresponding to a sheet-shaped functional element 10, a power receiving portion 20, a driving portion 30, and a control portion 40 are provided. The sheet-shaped functional element 10, the power receiving portion 20, the driving portion 30, and the control portion 40 are disposed in the holes 530 to 533, and resin layers 51 to 53 are integrated therewith to form an interlayer film 50. When holes for disposing the members are provided in this manner, steps are less likely to be formed on the surface of the composite interlayer film even when the thickness of the sheet-shaped functional element 10, power receiving portion 20, driving portion 30, and control portion 40 is large.

Note that while the power receiving portion 20, the driving portion 30, and the control portion 40 are formed in one unit by a flexible substrate 80 in the present embodiment, two units may be formed by two flexible substrates as in the first embodiment, or three or more units may be formed.

In the present embodiment, holes 511 and 512 corresponding to the driving portion 30 and the control portion 40 are also provided in the resin layer (resin layer 51) other than the resin layer 53. By providing the holes 511 and 512 in another resin layer (e.g. resin layer 51) at positions corresponding to the holes 531 and 532 in addition to the holes in the resin layer 53, height differences can be absorbed using two or more resin layers, even if components have different heights.

Note, however, that holes other than the holes provided in the resin layer 53 do not need to be provided in the second embodiment. Additionally, Figs. 6 and 7 illustrate a configuration in which there are three resin layers. However, there may be four or more resin layers, and in that case, the resin layer 53 in which the sheet-shaped functional element 10, the power receiving portion 20, the driving portion 30, and the control portion 40 are disposed therein may be disposed between one resin layer and two or more laminated resin layers, or between two or more laminated resin layers and two or more laminated resin layers.

In the present embodiment, the sheet-shaped functional element 10, the power receiving portion 20, the driving portion 30, and the control portion 40 are disposed in holes provided in the resin layer, and a plurality of resin layers are laminated to obtain a laminate. Then, after obtaining a composite interlayer film from the laminate as in the first embodiment, the laminated glass 1B can be manufactured. Of course, as described in the first embodiment, bonding of the laminated glass member and the resin layer can be combined with integration of the composite interlayer film.

### [Third embodiment]

A laminated glass 1C of a third embodiment of the present invention is a roof glass. The roof glass 1C is attached to a vehicle main body so as to be openable or closable in an arrow direction. The roof glass 1C includes a sheet-shaped functional element 10 such as a light control element, and a laminated glass unit 130 in which a power receiving portion 20, a driving portion 30, and a control portion 40 are integrated.

The laminated glass unit 130 (i.e., power receiving portion 20, driving portion 30, and control portion 40) is preferably provided in the vicinity of the outer peripheral edge of the roof glass 1C, for example.

Generally, a shielding portion referred to as black ceramics is sometimes provided in the roof glass 1C, but in the present embodiment, the laminated glass unit 130 (i.e., power receiving portion 20, driving portion 30, and control portion 40) is preferably disposed in a position that overlaps the shielding portion. Note that the shielding portion is preferably provided on the vehicle interior side of the roof glass 1C, for example, and the power receiving portion 20, the driving portion 30, and the control portion 40 are preferably shielded by the shielding portion when viewed from inside the vehicle.

Although the shielding portion is preferably formed of black ceramics, for example, it is not particularly limited as long as it can shield the power receiving portion 20, the driving portion 30, the control portion 40, and the like.

Additionally, vehicle main body units 230 and 240 in which a wireless power supply device and a wireless communication device are integrated are provided in the vehicle main body. The vehicle main body unit 230 only needs to be disposed in a position where it faces or comes close to the laminated glass unit 130 in a state when the roof glass 1C is in a closed state, and may be provided in the vehicle ceiling or may be provided on the vehicle interior side of the shielding portion, for example. Additionally, the vehicle main body unit 240 only needs to be disposed in a position where it faces or comes close to the laminated glass unit 130 in a state when the laminated glass 1C is an open state, and may be provided in the vehicle ceiling or may be provided on the vehicle interior side of the shielding portion, for example. Note that the state where the roof glass 1C is closed is a state where the tip end of the roof glass 1 extends the farthest forward and there is no gap between the tip end of the roof glass 1C and the vehicle main body. Meanwhile, the state where the roof glass 1C is open is a state where the tip end of the roof glass 1C moves farthest backward and there is an open space between the tip end of the roof glass 1C and the vehicle main body.

The power receiving portion 20 of the laminated glass unit 130 extracts power from the magnetic field generated by the power transmission coil of the wireless power supply device provided in the vehicle main body units 230 and 240, converts the extracted power from alternating current to direct current, and supplies the converted current to the driving portion 30 of the laminated glass unit 130. The control portion 40 of the laminated glass unit 130 receives a wireless signal from the wireless communication device provided in the vehicle main body units 230 and 240, and controls the driving portion 40 of the laminated glass unit 130 based on the received signal. Note that since power is not supplied to the laminated glass unit via a cable, in the laminated glass (roof glass) 1C of the third embodiment of the present invention, the cable supplying power to the laminated glass unit does not deteriorate unit over the course of repeated opening and closing of the roof glass 1C.

### [Fourth embodiment]

A laminated glass 1D of a fourth embodiment of the present invention is a roof glass. The roof glass 1D is attached to the vehicle main body in a non-openable or closable state. The roof glass 1D includes a sheet-shaped functional element 10 such as a light control element, and a laminated glass unit 130 in which a power receiving portion 20, a driving portion 30, and a control portion 40 are integrated.

The laminated glass unit 130 (i.e., power receiving portion 20, driving portion 30, and control portion 40) may be provided in the vicinity of the outer peripheral edge of the roof glass 1D, for example and be disposed in a position overlapping a shielding portion as described in the third embodiment.

Additionally, a vehicle main body unit 250 in which a wireless power supply device and a wireless communication device are integrated is provided in the vehicle main body. The vehicle main body unit 250 only needs to be disposed in a position where it faces or comes close to the laminated glass unit 130, and may be provided on a surface of the vehicle ceiling or may be provided in the shielding portion, for example.

The power receiving portion 20 of the laminated glass unit 130 extracts power from the magnetic field generated by the power transmission coil of the wireless power supply device provided in the vehicle main body unit 250, converts the extracted power from alternating current to direct current, and supplies the converted current to the driving portion 30 of the laminated glass unit 130. The control portion 40 of the laminated glass unit 130 receives a wireless signal from the wireless communication device provided in the vehicle main body unit 250, and controls the driving portion 40 of the laminated glass unit 130 based on the received signal. Note that since power is not supplied to the laminated glass unit via a cable, the cable is not damaged during assembly of the vehicle or during transport of the roof glass.

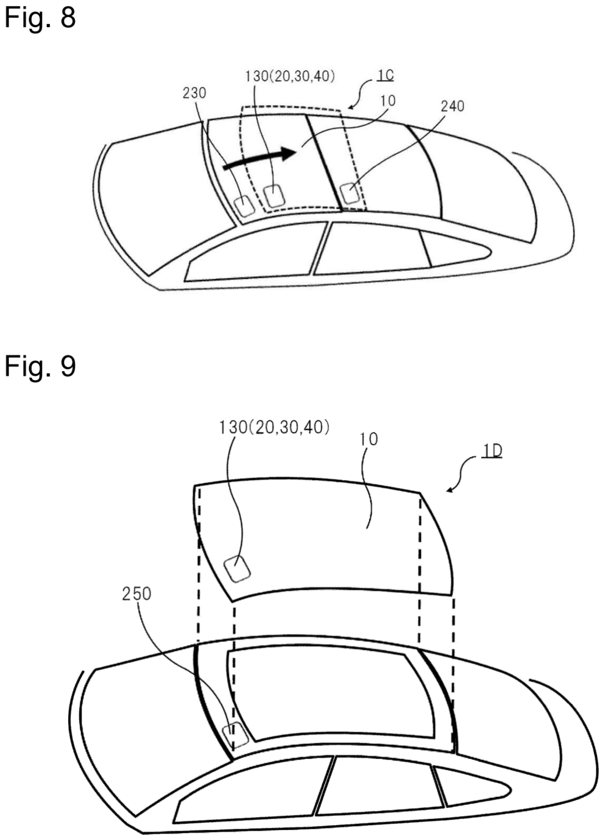

While the power receiving portion 20, the driving portion 30, and the control portion 40 are provided as one unit 130 in the interlayer film for laminated glass in the configuration of Figs. 8 and 9 (third and fourth embodiments), these do not need to be provided as one unit, and may be provided in two or more units as in the first embodiment.

### [Modification]

### (Arrangement of members in interlayer film for laminated glass)

In the first embodiment (Fig. 1) described above, all members provided in the interlayer film for laminated glass such as the sheet-shaped functional element 10, the power receiving portion 20, the driving portion 30, and the control portion 40 are embedded in the interlayer film for laminated glass. However, not all of the members need to be embedded, and at least one member may be exposed on a surface (main surface) or end surface of the interlayer film for laminated glass without being embedded. For example, as illustrated in Fig. 6 (second embodiment), the driving portion 30, the control portion 40, and the like may be exposed on the surface of the interlayer film for laminated glass 50, or members other than these may be exposed from the interlayer film for laminated glass. Alternatively, members other than the resin layer may be exposed on an end surface of the interlayer film for laminated glass. Of course, even in a case where holes are provided in a part of the resin layer and various members are disposed in the holes as illustrated in Fig. 6 (second embodiment), all of the members other than the resin layer may be embedded in the interlayer film for laminated glass.

However, it is preferable that at least one member of the sheet-shaped functional element 10, power receiving portion 20, driving portion 30, and control portion 40 is embedded in the interlayer film for laminated glass, and it is more preferable that all of the members are embedded in the interlayer film. In the present invention, as described above, while these members are embedded, there is no cable (wiring) on the end surface of the interlayer film for laminated glass for supplying power to the sheet-shaped functional element 10 or transmitting a control signal to the driving portion of the sheet-shaped functional element 10. Hence, an even more durable laminated glass can be provided.

### (Colored resin layer)

At least one of the resin layers forming the interlayer film for laminated glass may be a colored resin layer. The colored resin layer contains a coloring agent in addition to the thermoplastic resin and plasticizer described above. The coloring agent contained in the colored resin layer is not particularly limited, and the colorants that have been traditionally used in resin layers can be used, such as blue, yellow, red, green, purple, white, and black colorants. Pigments and dyes can be used as colorants.

Examples of pigments used in colored resin layers include carbon black, copper phthalocyanine pigments such as Pigment Blue, phthalocyanine pigments such as cobalt phthalocyanine pigments, anthraquinone pigments, perylene pigments, diketopyrrolopyrrole pigments, quinacridone pigments, perinone pigments, thioindigo pigments, isoindoline pigments, isoindolinone pigments, quinophthalone pigments, threne pigments, dioxazine pigments, pyrrocoline pigments, fluorbin pigments, azo pigments, titanium dioxide pigments, calcium carbonate pigments, metal oxide pigments, Ni complex pigments, and other metal complex pigments.

Additionally, examples of dyes include azo dyes, cyanine dyes, triphenylmethane dyes, phthalocyanine dyes, anthraquinone dyes, naphthoquinone dyes, quinone imine dyes, methine dyes, azo-methine dyes, squarylium dyes, acridine dyes, styryl dyes, coumarin dyes, quinoline dyes, and nitro dyes. The dyes may also be disperse dyes.

The pigments and dyes that form the coloring agent described above may be blended directly to the resin, or they may be blended to the resin after being made into ink or toner.

In the first and second embodiments described above, of the resin layers 51 and 52 or the resin layers 51, 52, and 53, any one layer may be a colored resin layer. Alternatively, a resin layer other than the resin layers 51 to 53 may be provided, and that resin layer may be a colored resin layer.

The colored resin layer does not need to be provided over the entire region of the interlayer film, and may be provided in a partial region of the interlayer film. In such a case, the colored resin layer is preferably disposed in a position overlapping the power receiving portion 20, the driving portion 30, and the control portion 40, for example.

The colored resin layer may be provided on the vehicle interior side or the vehicle exterior side of the power receiving portion 20, driving portion 30, and control portion 40, for example. For example, when provided on the vehicle interior side, the colored resin layer can shield the power receiving portion 20, the driving portion 30, and the control portion 40 and prevent them from being viewed from the inside of the vehicle.

### (Noise countermeasures)

When using wireless power supply, if the power being extracted by the power receiving portion is large, it may cause a large amount of noise. In order to prevent the driving portion and control portion from being affected by such noise, the driving portion and control portion may be covered with a metal sheet or stored in a metal case.

In the above description, the laminated glass of the present invention has been specifically described using examples of its application to a side glass and a roof glass of an automobile, but it may also be applied to members other than a side glass and a roof glass of an automobile. For example, the laminated glass of the present invention may be applied to a side glass or a windshield glass (windshield).

Moreover, while the laminated glass of the present invention can also be used as a window glass for vehicles other than automobiles, aircraft, ships, and other vehicles, as well as buildings and the like, it is preferable to use it as a laminated glass for an automobile. In the case of the laminated glass for an automobile, it is preferably applied to one of a side glass, a rear glass, and a roof glass, and more preferably applied to a side glass or a roof glass.

The laminated glass of the first to fourth embodiments of the present invention and its modifications are merely an example of the laminated glass of the present invention, and the laminated glass of the present invention is not limited to the laminated glass of the first to fourth embodiments of the present invention and its modifications.

### Reference Signs List

1A to 1D laminated glass
10 sheet-shaped functional element (light control element)
20 power receiving portion
21 power receiving device
22 boost converter
30 driving portion
40 control portion
41 control device
42 reception device
43 LED light-emitting device
50 interlayer film for laminated glass
51 to 53 resin layer
61, 62 laminated glass member
80, 81, 82 flexible substrate
110, 120 unit
130 laminated glass unit
210 wireless power supply device
220 wireless communication device
230 to 250 vehicle main body unit
300 side door
310, 320 frame

## Claims

1. A laminated glass comprising:
a pair of laminated glass members;
an interlayer film for laminated glass disposed between the pair of laminated glass members;
a sheet-shaped functional element;
a power receiving portion that receives power by wireless power supply;
a driving portion that drives the sheet-shaped functional element by the power received by the power receiving portion; and
a control portion that receives a signal transmitted by a wireless apparatus and controls the driving portion based on the received signal,
the sheet-shaped functional element, the power receiving portion, the driving portion, and the control portion being provided in the interlayer film for laminated glass.

2. The laminated glass according to claim 1, wherein the sheet-shaped functional element is at least one type of element selected from the group consisting of a light control element, a display element, a heater element, and a touch panel.

3. The laminated glass according to any one of claims 1 and 2, wherein at least one selected from the group consisting of the sheet-shaped functional element, the power receiving portion, the driving portion, and the control portion is embedded in the interlayer film for laminated glass.

4. A composite interlayer film for laminated glass comprising:
a sheet-shaped functional element;
a power receiving portion that receives power by wireless power supply;
a driving portion that drives the sheet-shaped functional element by the power received by the power receiving portion;
a control portion that receives a signal transmitted by a wireless apparatus and controls the driving portion based on the received signal; and
an interlayer film for laminated glass,
the power receiving portion, the driving portion, and the control portion being provided in the interlayer film for laminated glass.
